# EUROPÄISCHE PATENTANMELDUNG

(11) **EP 1 748 226 A1**
(43) Veröffentlichungstag der Anmeldung: **31.01.2007**
(21) Anmeldenummer: 06015129.7
(22) Anmeldetag: 20.07.2006
(51) Int. Cl.: F16H 55/18

(54) **Zahnrad mit Zahnspielausgleich**

(30) Priorität: 28.07.2005 DE 102005035944
(71) Anmelder: Rudolf Schwarz GmbH & Co. KG, 74936 Siegelsbach (DE)
(72) Erfinder: Fischer, Peter, 69434 Heddesbach (DE)
(74) Vertreter: Naumann, Ulrich

(57) **Zusammenfassung**

Ein Zahnrad, vorzugsweise Stirnrad (1), mit einem ersten Teilrad (2) zur eigentlichen Kraftübertragung und einem zum ersten Teilrad (2) parallel angeordneten zweiten Teilrad (2) zum Spielausgleich, wobei die beiden Teilräder (2, 3) im Wesentlichen gleiche Bestimmungsgrößen haben und über dazwischen ausgebildete Verbindungsmittel unter definierter Zuordnung der Zähne (4), zumindest geringfügig verdreht zueinander, elastisch miteinander verbunden sind, ist dadurch gekennzeichnet, dass die Verbindung zwischen den Teilrädem (2, 3) über ein in sich elastisches, mit beiden Teilrädem (2, 3) fest verbundenes Material (6) realisiert ist, welches die beiden Teilräder (2, 3) zumindest geringfügig zueinander beabstandet hält.

## Beschreibung

Die Erfindung betrifft ein Zahnrad, vorzugsweise Stirnrad, mit einem ersten Teilrad zur eigentlichen Kraftübertragung und einem zum ersten Teilrad parallel angeordneten zweiten Teilrad zum Spielausgleich, wobei die beiden Teilräder im wesentlichen gleiche Bestimmungsgrößen haben und über dazwischen ausgebildete Verbindungsmittel unter definierter Zuordnung der Zähne, zumindest geringfügig verdreht zueinander, elastisch miteinander verbunden sind.

Als Zahnrad bezeichnet man ein Rad, dessen Umfang mit kleinen Erhöhungen und Vertiefungen versehen ist, den sogenannten Zähnen und Zahnlücken. Man unterscheidet verschiedene Grundformen von Zahnrädern, nämlich Zahnräder mit Evolventenverzahnung, Treibstockverzahnung oder Zykloidenverzahnung. Am weitesten verbreitet ist die Evolventenverzahnung.

Die Zähne haben dabei eine solche Form, dass sie - bei kämmenden Zahnrädern - aneinander abrollen können. Um eine ruckfreie Drehung zweier kämmender Zahnräder zu erreichen, müssen mindestens zwei Zähne im Eingriff stehen. Die Kurve einer Zahnform bezeichnet man als Evoivente.

Zahnräder werden vor allem im Getriebe eingesetzt. Dazu werden sie auf Wellen oder Achsen gelagert bzw. so angebracht, dass ihre Zähne ineinander greifen (kämmen) und so die Drehbewegung des einen Zahnrads auf das andere übertragen werden kann. Dabei kehrt sich die Drehrichtung um, was ein gewünschter Effekt dieser Anordnung sein kann. Sind die Räder unterschiedlich groß, so kann entsprechend der physikalischen Gesetze ― Kraft x Weg = konstant ― die Drehzahl erhöht bzw. verringert werden, wobei das Drehmoment vermindert bzw. erhöht wird. Auf diese Weise können Zahnräder auch der Übersetzung von Kräften und Geschwindigkeiten dienen.

Aus der Praxis sind unterschiedliche Arten von Zahnrädern bekannt, nämlich insbesondere Stirnräder, Kegelräder, Schraubenräder und Hypoidräder. Als Sonderformen sind Schneckenräder, Zahnstangen wie auch elliptische Zahnräder anzusehen.

Ein Einsatzgebiet konventioneller Zahnräder, bzw. Zahnradsätze ist im Kraftfahrzeugbereich zu sehen, so beispielsweise der Einsatz von Stimrädem als Nockenwellenräder. Der Antrieb der Nockenwelle erfolgt bislang regelmäßig über einen Zahnriementrieb auf die einlassseitige Nockenwelle und von dort jeweils mit einem Zahnradsatz auf die auslassseitige Welle. Dies wurde bisher mit schrägverzahnten Räderpaaren bewerkstelligt. Es ist gerade beim Automobil beachtlich, dass die Motorgeräusche bzw. Verbrennungsgeräusche durch die Voreinspritzung mittlerweile derart niedrig geworden sind, dass die mechanischen Geräusche, so auch die Verzahnungsgeräusche, stärker hörbar werden. Um die Verzahnungsgeräusche zu reduzieren, ist ein spielarmer Betrieb der Zahnradsätze erforderlich. So sind die Zahnräder spielarm und somit laufruhig zu betreiben. Jedoch verschleißen die Zahnräder insbesondere im Bereich der Zahnflanken, wodurch zunehmend Spiel auftritt und wiederum Geräusche entstehen. Obendrein erhöht sich der Verschleiß mit zunehmendem Spiel. Verzahnungsgeräusche nehmen daher zu.

Zur Reduktion der Verzahnungsgeräusche wurde bereits in der Praxis ein Zahnspielausgleich realisiert. Mit einem Stimradsatz, bei dem das getriebene Rad zweiteilig ist, wurde ein einfaches und dabei wirkungsvolles Konzept eines verspannten und damit spielfreien und akustisch ruhig Zahnradverbandes entwickelt. Das breitere Zahnrad ist dabei zur Kraftübertragung auf der Nockenwelle aufgeschrumpft und hat erhöhte Rampen, meist drei an der Zahl. Das lose aufgeschobene schmale Rad hat dazu passende Vertiefungen, die in die Rampen eingreifen und damit entsprechend der axialen Lage eine definierte Zuordnung der Zähne erzeugen. Zwischen den Teilrädern ist eine Tellerfeder und eine Zwischenscheibe vorgesehen, die mit einem Sicherungsring befestigt sind. Dabei wird eine definierte Axialkraft erzeugt, die die Zahnflanke des schmalen Rades auf der der Drehrichtung abgewandeten Seite des treibenden Rades zur Anlage bringt und damit einen aus Vorspannung resultierenden Spielausgleich bewirkt.

Der aus der Praxis bekannte Zahnspielausgleich ist jedoch unter Zugrundelegung der dort verwendeten mechanischen Feder einerseits aufwendig in der Konstruktion und Montage und unterliegt andererseits einem erheblichen Verschleiß, zumal die dort verwendeten mechanischen Bauteile eine maximale Standzeit haben. Bei zunehmender Ermüdung der Tellerfeder nimmt die Fähigkeit zum Zahnspielausgleich ab. Es tritt wieder das gleiche Problem auf wie bei dem konventionellen Zahnrad.

Der vorliegenden Erfindung liegt daher die Aufgabe zugrunde, ein Zahnrad der gattungsbildenden Art, d.h. ein Zahnrad mit Zahnspielausgleich, derart auszugestalten und weiterzubilden, dass bei einfachster Konstruktion ein wirksamer Zahnspielausgleich geschaffen ist, der sich verschleißarm verhält und über die gesamte Lebensdauer des Zahnrads im Wesentlichen erhalten bleibt.

Die voranstehende Aufgabe ist durch die Merkmale des Patentanspruchs 1 gelöst. Danach ist das in Rede stehende Zahnrad dadurch gekennzeichnet, dass die Verbindung zwischen den Teilrädern über ein in sich elastisches, mit beiden Teilrädern fest verbundenes Material realisiert ist, weiches die beiden Teilräder zumindest geringfügig zueinander beabstandet hält.

Erfindungsgemäß ist erkannt worden, dass das aus der Praxis bekannte Prinzip zur Schaffung eines Zahnspielausgleichs hinreichend gut ist, insbesondere auch, um einen verschleißarmen Zahnspielsausgleich - über die gesamte Lebensdauer des Zahnrads hinweg - zu schaffen. So ist weiter erkannt worden, dass ausgehend von dem bekannten Zahnspielausgleich die konstruktiv aufwendigen und mechanisch anfälligen Bestandteile zu ersetzen sind, nämlich im Sinne einer konstruktiven Vereinfachung. Dies gelingt dadurch, dass man die Verbindung zwischen den Teilrädern - in verblüffend einfacher weise - über ein in sich elastisches, mit beiden Teilrädern fest verbundenes Material realisiert, welches die beiden Teilräder zumindest geringfügig zueinander beabstandet.

In weiter erfindungsgemäßer Weise wurde demnach von der bekannten Realisierung eines Zahnspielausgleichs in raffinierter Weise insoweit abgewichen, als die elastische Verbindung zwischen den beiden Zahnrädern, d.h. zwischen den Teilrädern, nicht etwa über ein maschinenbauliches Element sondern vielmehr über ein reines Material mit seinen elastischen Materialeigenschaften generiert wird, nämlich mit einem in sich hinreichend elastischen Material, welches die beiden Teilräder unter gegenseitiger Beabstandung zueinander in verdrehter Anordnung hält, wobei sich die verdrehte Anordnung auf die Zahnfolge bezieht. Mit anderen Worten sind die beiden Teilräder mit gleichen Bestimmungsgrößen ausgestattet und dabei bei konzentrischer Anordnung derart zueinander verdreht, dass beim Eingriff eines dritten Zahnrads, d.h. beim Kämmen mit den verbundenen Teilrändern, eine erzwungene, zumindest geringfügige Drehung eines der beiden Teilräder stattfindet, so dass das zum Spielausgleich dienende verdrehte Teilrad einen solchen Druck auf die Zähne bzw. Flanken des eingreifenden Zahnrads ausübt, dass die Zahnräder unter Druckbeaufschlagung spielfrei kämmen. So ist mit einfachen Mitteln ein Zähnspielsausgleich geschaffen, der die aus dem Stand der Technik bekannten Probleme allesamt kostengünstig, d.h. bei einfachster Konstruktion, eliminiert.

In vorteilhafter Weise ist das die Teilräder verbindende Material, d.h. das Verbindungsmittel, als Kunststaffmaterial ausgeführt. Die Verwendung eines Elastomermaterial bieten sich ebenfalls an.

Ebenso ist es in vorteilhafter Weise denkbar, dass das die Teilräder verbindende Material ein Gummimaterial ist. Der Einsatz eines elastischen Verbundwerkstoffs mit entsprechenden Kenndaten kann insbesondere zur Definition ganz bestimmter elastischer Eigenschaften von Vorteil sein. Auf jeden Fall ist zu gewährleisten, dass das Verbindungsmittel unlösbar mit den beiden Teilrädern verbunden ist und dass das Verbindungsmittel hinreichend elastisch ist, um ein zumindest geringfügiges Verdrehen zwischen den beiden Teilrädern zu gestatten.

Entsprechend dem Einsatz des Zahnrads kann es erforderlich und insoweit von Vorteil sein, dass das die Teilräder verbindende Material temperaturbeständig ist. Insbesondere beim Einsatz im Kraftfahrzeugbereich ist es von weiterem Vorteil, wenn das die Teilräder verbindende Material ölbeständig ist.

Bereits zuvor ist ausgeführt worden, dass eine fest Verbindung zwischen dem Verbindungsmittel und den beiden Teilrädern zu realisieren ist, und zwar unter koaxialer Anordnung der beiden Teilräder und unter paralleler Ausrichtung der Flächen der Teilräder, so dass sich eine Art Zahnradpaket unter Zwischenschaltung des Verbindungsmittels ergibt. Dabei ist es von weiterreichendem Vorteil, wenn das die Teilräder verbindende Material eine adhäsive Verbindung zu den Teilrädern bildet. Dies setzt regelmäßig eine glatte Oberfläche der gegenüberliegenden Flächen der Teilräder voraus. Dabei sei angemerkt, dass grundsätzlich darauf zu achten ist, dass die sich zwischen dem Verbindungsmittel und der jeweiligen Oberfläche einstellende Grenzflächenenergie geringer ist als die Summe der Oberflächenenergien einerseits des Teilrades und andererseits des Verbindungsmittels. Nur dann lässt sich eine hinreichende Haftung durch Adhäsion erzielen.

Auch könnte es von Vorteil sein, die Haftung zwischen den Teilrädern und dem Verbindungsmittel durch zumindest geringfügige Diffusion an der Oberfläche zu begünstigen. Dazu könnte an der Oberfläche der Zahnräder eine die Diffusion begünstigende Beschichtung, eine Dotierung oder sonstige Maßnahmen vorgesehen sein.

Im Konkreten könnte das die Teilräder verbindende Material eine Art Scheibe zwischen den Teilrädern bilden, nämlich bei ringscheibenartiger Ausgestaltung der Teilräder entsprechend einer Kreisscheibe bzw. Ringscheibe.

Des Weiteren ist es von Vorteil, wenn dass die Teilräder verbindende Material zwischen zwei parallelen Flächen der Teilräder ausgebildet ist, so dass dadurch wiederum eine parallele Zuordnung der beiden Teilräder zueinander gewährleistet ist. Wie bereits zuvor erwähnt, haben die parallelen Flächen der Teilräder in vorteilhafter Weise eine glatte Oberfläche zur Begünstigung der Haftung.

Das die Teilräder verbindende Material reicht in weiter vorteilhafter Weise von der Mitte der Teilräder oder zumindest von einem inneren Bereich bis in die Nähe der Zähne bzw. Zahnlücken nach außen. Eine zumindest geringfügige Beabstandung zu den Zahnrädern ist von Vorteil, so dass das Verbindungsmittel keinesfalls bis zum kämmenden Bereich der Zähne/Zahnlücken reicht.

Des Weiteren kann das die Teilräder verbindende Material eine Dicke im Bereich von 0,5 bis 2 mm haben, wobei die Dicke u.a. auf die Größe des Zahnrads und auf die erforderliche Drehung zwischen den Teilrädern abzustimmen ist.

So ist es in vorteilhafter Weise von besonderer Bedeutung, dass die beiden Teilräder mit ihren Zähnen und Zahnlücken derart zueinander verdreht sind, dass die Zähne eines dritten Zahnrads, eines Schneckenrades, einer Zahnstange, eines Zahnriemens oder dergleichen unter Verdrehung der beiden Teilräder entgegen der Kraft des elastischen Mittels mit den Teilrädern unter Spannung dabei spielfrei kämmen. Auf raffinierte und dabei verblüffend einfache Weise ist dadurch ein Zahnspielausgleich geschaffen.

Bereits zuvor ist angesprochen worden, dass das eine Teilrad zur eigentlichen Kraftübertragung und das andere Teilrad zum Spielausgleich bzw. zur Schaffung einer Vorspannung in Bezug auf ein kämmendes Zahnrad oder dergleichen dient. Dabei ist es wiederum von Vorteil, wenn das zur Kraftübertragung dienende Teilrad breiter ist als das zum Spielausgleich dienende Teilrad. So könnte das Verhältnis in der Bereite etwa 2/3 und zu 1/3 betragen. Wesentlich ist jedenfalls, dass das zum Spielsausgleich dienende Teilrad schmaler ausgeführt sein kann, als das zur Kraftübertragung dienende Teilrad, wobei ein kämmendes Rad in die Zahnbereiche beider Teil räder eingreift, wodurch unter Verdrehung der Teilräder eine Vorspannung entsteht.

Die Teilräder selbst können aus Metall oder aus Kunststoff gefertigt sein, je nach den konkreten Anforderungen. Die erfindungsgemäße Lehre lässt sich auf Zahnräder unterschiedlichster Bauformen und Materialbeschaffenheiten anwenden.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung eines bevorzugten Ausführungsbeispiels der Erfindung anhand der Zeichnung zu verweisen. In Verbindung mit der Erläuterung des bevorzugten Ausführungsbeispiels der Erfindung anhand der Zeichnung werden auch im Allgemeinen bevorzugte Ausgestaltungen und Weiterbildungen der Lehre erläutert. In der Zeichnung zeigen
- Fig. 1: in einer schematischen Stirnansicht ein Ausführungsbeispiel eines erfindungsgemäßen Zahnrads und
- Fig. 2: den Gegenstand aus Fig. 1 in einer schematischen Seitenansicht,

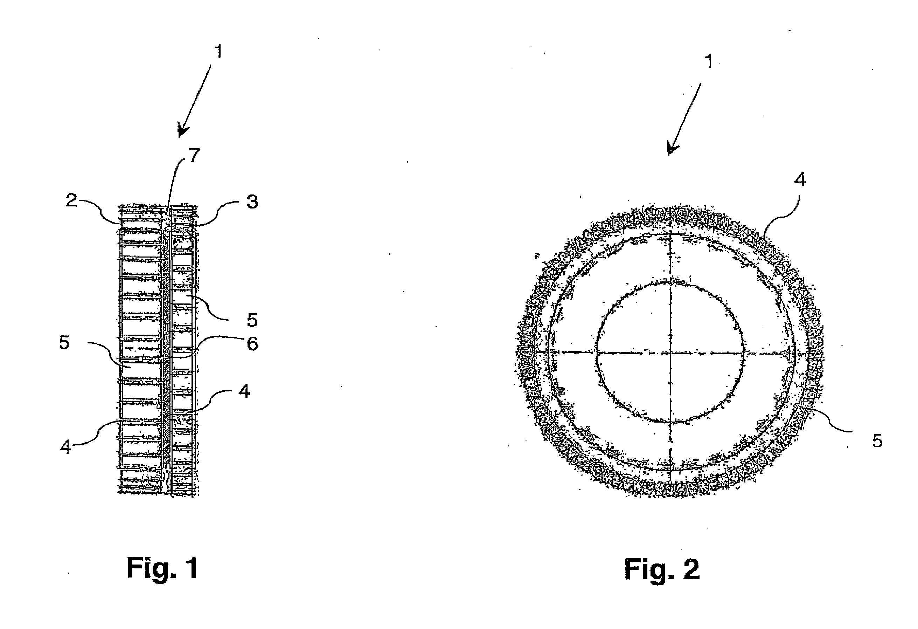

Die Fig. 1 und 2 zeigen ein Ausführungsbeispiel eines erfindungsgemäßen Zahnrads in Form eines Stirnrads 1, wobei dort ein erstes Teilrad 2 zur eigentlichen Kraftübertragung und ein zweites Teilrad 3 zum Spielausgleich vorgesehen sind. Die beiden Teilräder 2, 3 sind parallel zueinander angeordnet und haben im Wesentlichen die gleichen Bestimmungsgrößen.

Über ein zwischen den Teilrädern 2, 3 vorgesehenes Verbindungsmittel ist eine definierte Zuordnung der Zähne 4 und Zähnlücken 5 der beiden Teilräder 2, 3 zueinander realisiert.

Erfindungsgemäß ist die Verbindung zwischen den Teilrädern 2, 3 über ein in sich elastisches Material 6 realisiert, wodurch die beiden Teilräder 2, 3 einen zumindest geringfügigen Abstand 7 zueinander haben. Der Abstand 7 ist durch die Dicke des Materials 6 definiert.

Des Weiteren ist wesentlich, dass es sich bei dem elastischen Material 6 um Gummi oder Kunststoff handeln kann, wobei eine feste Verbindung zwischen dem Material 6 und den beiden Teilrädern 2, 3 realisiert ist.

Die Fig. 1 und 2 zeigen gemeinsam, dass die Teilräder 2, 3 derart gegeneinander verdreht sind, dass ein in den Fig. nicht gezeigtes drittes Teilrad, welches mit der Zahnradanordnung kämmt, nur unter Vorspannung eingreifen kann. Aus der daraus resultierenden Kraftbeaufschlagung der Flanken ist ein wirksamer Zahnspielausgleich geschafften, der auch bei einem Verschleiß der Zahnräder entsprechend dem realisierten Versatz der Teilräder 2, 3 erhalten bleibt.

Zur Vermeidung von Wiederholungen sei ansonsten auf die allgemeine Beschreibung verwiesen.

Schließlich sei angemerkt, dass das voranstehend erörterte Ausführungsbeispiel zur beispielhaften Erörterung der beanspruchten Lehre dient, diese jedoch nicht auf das Ausführungsbeispiel einschränkt.

## Patentansprüche

1. Zahnrad, vorzugsweise Stirnrad (1), mit einem ersten Teilrad (2) zur eigentlichen Kraftübertragung und einem zum ersten Teilrad (2) parallel angeordneten zweiten Teilrad (3) zum Spielausgleich, wobei die beiden Teilräder (2, 3) im Wesentlichen gleiche Bestimmungsgrößen haben und über dazwischen ausgebildete Verbindungsmittel unter definierter Zuordnung der Zähne (4), zumindest geringfügig verdreht zueinander, elastisch miteinander verbunden sind,
**dadurch gekennzeichnet, dass** die Verbindung zwischen den Teilrädern (2, 3) über ein in sich elastisches, mit beiden Teilrädern (2, 3) fest verbundenes Material (6) realisiert ist, welches die beiden Teilräder (2, 3) zumindest geringfügig zueinander beabstandet hält.

2. Zahnrad nach Anspruch 1, **dadurch gekennzeichnet, dass** das die Teilräder (2, 3) verbindende Material (6) (Verbindungsmittel) ein Kunststoffmaterial, vorzugsweise ein Elastomermaterial, oder ein Gummimaterial oder ein elastischer Verbundwerkstoff ist.

3. Zahnrad nach Anspruch 1 oder 2, **dadurch gekennzeichnet, dass** das die Teilräder (2, 3) verbindende Material (6) temperaturbeständig und/oder ölbeständig ist.

4. Zahnrad nach einem der Ansprüche 1 bis 3, **dadurch gekennzeichnet, dass** das die Teilräder (2, 3) verbindende Material (6) eine adhäsive Verbindung zu den Teilrädern (2, 3) bildet.

5. Zahnrad nach einem der Ansprüche 1 bis 4, **dadurch gekennzeichnet, dass** das die Teilräder (2, 3) verbindende Material (6) eine Art Scheibe zwischen den Teilrädern (2, 3) bildet, wobei das die Teilräder (2, 3) verbindende Material (6) in Form einer Kreisscheibe oder Ringscheibe ausgebildet sein kann.

6. Zahnrad nach einem der Ansprüche 1 bis 5, **dadurch gekennzeichnet, dass** das die Teilräder (2, 3) verbindende Material (6) zwischen zwei parallelen Flächen der Teilräder (2, 3) ausgebildet ist, wobei die parallelen Flächen der Teilräder (2, 3) vorzugsweise eine glatte Oberfläche haben.

7. Zahnrad nach einem der Ansprüche 1 bis 6, **dadurch gekennzeichnet, dass** das die Teilräder (2, 3) verbindende Material (6) von der Mitte der Teilräder (2, 3) oder von einem inneren Randbereich bis in die Nähe der Zähne (4) bzw. Zahnlücken (5) nach außen reicht.

8. Zahnrad nach einem der Ansprüche 1 bis 7, **dadurch gekennzeichnet, dass** das die Teilräder (2, 3) verbindende Material (6) eine Dicke im Bereich von 0,5 mm bis 2 mm hat.

9. Zahnrad nach einem der Ansprüche 1 bis 8, **dadurch gekennzeichnet, dass** die beiden Teilräder (2, 3) mit ihren Zähnen (4) und Zahnlücken (5) derart zueinander verdreht sind, dass die Zähne (4) eines dritten Zahnrades, eines Schneckenrades, einer Zahnstange, eines Zahnriemens oder dergleichen unter Verdrehung der beiden Teilräder (2, 3) entgegen der Kraft des elastischen Mittels mit den Teilrädern (2, 3) unter Spannung und dabei spielfrei kämmen.

10. Zahnrad nach einem der Ansprüche 1 bis 9, **dadurch gekennzeichnet, dass** das zur Kraftübertragung dienende Teilrad (2) breiter ausgeführt ist als das zum Spielausgleich dienende Teilrad (3), dass nämlich die Teilräder (2, 3) Dickenunterschiede vorzugsweise im Verhältnis von 2/3 zu 1/3 haben.

11. Zahnrad nach einem der Ansprüche 1 bis 10, **dadurch gekennzeichnet, dass** die Teilräder (2, 3) aus Metall und/oder aus Kunststoff gefertigt sind.
